# EUROPÄISCHE PATENTSCHRIFT

(11) **EP 1 741 664 B1**
(45) Veröffentlichungstag und Bekanntmachung des Hinweises auf die Patenterteilung: **07.01.2009**
(21) Anmeldenummer: 06011910.4
(22) Anmeldetag: 09.06.2006
(51) Int. Cl.: B66F 3/18, F16H 1/16

(54) **Stelleinrichtung zum Positionieren einer Last**
Actuator for positioning a load
Actionneur pour le positionnement d'une charge

(30) Priorität: 05.07.2005 AT 4542005
(43) Veröffentlichungstag der Anmeldung: 10.01.2007
(73) Patentinhaber: Zimmermann, Jürgen, 6900 Bregenz (AT)
(72) Erfinder: Zimmermann, Jürgen, 6900 Bregenz (AT)
(74) Vertreter: Hofmann, Ralf U.

(56) Entgegenhaltungen:
- EP-A- 0 014 070
- US-A- 2 981 518
- US-A- 3 339 892
- US-A- 3 532 322

## Beschreibung

Die Erfindung betrifft eine Stelleinrichtung zum Positionieren einer Last, mit einer Gewindespindel, die im Bereich eines Längsendes mit einem Trägerzahnrad, insbesondere in Form eines Schneckenrades, welches in einem Getriebegehäuse drehbar gelagert ist und mittels eines mit ihm in Zahneingriff stehenden Antriebszahnrades, insbesondere in Form einer Schnecke, in Drehung versetzbar ist, drehfest und achsial unverschiebbar verbunden ist, und mit einer auf dem Spindelgewinde angeordneten Spindelmutter, die durch eine Drehung der Gewindespindel zum Positionieren der Last achsial verstellbar ist, wobei ein im Bereich des Längsendes der Gewindespindel ausgebildeter Befestigungsteil der Gewindespindel, über welchen das Spindelgewinde zumindest teilweise abgedreht ist, eine zentrale Durchtrittsöffnung durch das Trägerzahnrad durchsetzt und mit dem Trägerzahnrad über eine Passfeder verbunden ist und weiters in einem aus der Durchtrittsöffnung des Trägerzahnrads herausragenden Endabschnitt mit einem Schraubengewinde versehen ist, auf das eine die Gewindespindel gegen das Trägerzahnrad verspannende Spannmutter aufgeschraubt ist. Eine solche Stelleinrichtung ist z.B. in der EP-A-0 014 070 offenbart.

Derartige Stelleinrichtungen sind bekannt und werden auch als Spindelhubgetriebe, Spindelmuttergetriebe oder Stellantriebe bezeichnet. Solche Stelleinrichtungen dienen zur Positionierung von Lasten in Form von Bauteilen oder Baugruppen. Beispielsweise kommen diese Stelleinrichtungen bei Hubtischen, Hebeböcken, höhenverstellbaren Bühnen, Ventilen mit motorisch verstellbaren Ventilschiebern, motorisch verstellbaren Betonschalungen usw. zum Einsatz.

Bei diesen Stelleinrichtungen werden drehende Bewegungen (von Antriebsmotoren oder Kurbeltrieben) in lineare Bewegungen entweder der Gewindespindel oder einer auf dem Gewinde der Gewindespindel angeordneten Spindelmutter umgesetzt. Bei der ersten, nicht gattungsgemäßen Art, ist eine Tragmutter drehbar in einem Getriebegehäuse gelagert, bei deren Drehung die unverdrehbare Gewindespindel in axiale Richtung verstellt wird. Bei der zweiten Art ist die Gewindespindel mit einem drehbar im Getriebegehäuse gelagerten Trägerzahnrad, meist in Form eines Schneckenrades drehfest verbunden und durch eine Drehung des Trägerzahnrads und somit der Gewindespindel wird eine auf dem Gewinde der Gewindespindel angeordnete und gegen Verdrehung gesicherte Spindelmutter in axialer Richtung der Gewindespindel verstellt.

Bei den Spindelmuttergetrieben, bei welchen die Gewindespindel drehbar ist und hierzu drehfest mit dem Trägerzahnrad, welches meist als Schneckenrad ausgebildet ist, verbunden ist, sind unterschiedliche Ausführungen für die Verbindung der Gewindespindel mit dem Trägerzahnrad bekannt:

Bei einer ersten herkömmlichen Ausführungsform wird als Ausgangsprodukt für die Gewindespindel eine Gewindestange mit durchgehendem Gewinde (in Form eines Trapezgewindes) eingesetzt, welches über einen endseitigen Abschnitt zur Ausbildung eines zylindrischen Schaftes abgedreht wird. Auf diesen ist zunächst eine Abstandshülse aufgeschoben, die an der Stufe zwischen dem zylindrischen Schaft und dem Beginn des Gewindes anliegt. Weiters ist das Trägerzahnrad auf den zylindrischen Schaft aufgeschoben und liegt einseitig an der Abstandshülse an. Im Bereich des freien Endes des Schaftes ist dieser mit einem Feingewinde (= Schraubengewinde) versehen, auf welches eine Spannmutter aufschraubbar ist. Diese Spannmutter verspannt das Trägerzahnrad und die Abstandshülse gegen die Stufe zwischen dem Schaft und dem Spindelgewinde der Spindel. Zur Verdrehsicherung ist in den zylindrischen Schaft weiters eine Passfeder eingesetzt, die in eine entsprechende Ausnehmung im Trägerzahnrad eingreift. Diese Verbindung zwischen der Spindel und dem Schneckenrad ist zwar relativ einfach herstellbar und weiters kann als Ausgangsprodukt für die Gewindespindel eine als Meterware kostengünstig kommerziell erhältliche Gewindestange eingesetzt werden, allerdings tritt das Problem auf, dass die Stufe zwischen dem Spindelgewinde und dem zylindrischen Schaft aufgrund des abgedrehten spiralig verlaufenden Gewindegangs keine gleichmäßige Anlagefläche für die Abstandshülse darstellt. Bei der Verspannung des Trägerzahnrads und der Abstandshülse gegen diese Schulter kann es dadurch zu einer axialen Verbiegung zwischen der Längsachse des zylindrischen Schaftes und dem Gewindeabschnitt der Gewindespindel kommen, wodurch eine unerwünschte Exzentrizität geschaffen wird. Eine Vergrößerung dieser Stufe unter einer Verringerung des Durchmessers des Schaftes ist aber bei einem vorgegebenen Durchmesser der Gewindespindel aufgrund der vom zylindrischen Schaft aufzunehmenden Drehmomente und gegebenenfalls aufzunehmenden Zugkräfte nicht praktikabel. Zur drehbaren Lagerung der Gewindespindel gegenüber einem Gehäuse sind auf beidseitig am Trägerzahnrad vorhandenen Schultern Axiallager angeordnet.

Bei einer anderen herkömmlichen Stelleinrichtung mit drehbarer Gewindespindel wird daher als Ausgangsmaterial für die Gewindespindel eine zylindrische Welle verwendet, auf welche zunächst ein Trapezgewinde gedreht wird und zwar im wesentlichen über die gesamte Länge der Gewindespindel mit Ausnahme eines Befestigungsteils an einem Ende der Welle. Dieser endseitige Befestigungsteil weist einen an das Trapezgewinde der Gewindespindel anschließenden zylindrischen Abschnitt auf, dessen Außendurchmesser zwischen dem Innen- und Außenradius des Trapezgewindes liegt. An diesen schließt mit einer Stufe ein zylindrischer Abschnitt mit einem kleineren Durchmesser an, der das an der Stufe zwischen den beiden zylindrischen Abschnitten anliegende Trägerzahnrad (das hier wieder als Schneckenrad ausgebildet ist) trägt, wobei zur Verdrehsicherung zwischen dem Trägerzahnrad und dem zylindrischen Abschnitt mit dem kleineren Durchmesser wiederum eine Passfeder vorgesehen ist. Im Bereich des Endes der Gewindespindel ist in den zylindrischen Abschnitt mit dem kleineren Durchmesser ein Feingewinde (= Schraubengewinde) geschnitten, auf welches eine das Trägerzahnrad gegen die Schulter spannende Spannmutter aufgeschraubt ist. Zur drehbaren Lagerung der Gewindespindel sind wiederum auf Schultern des Schneckenrades sitzende Axialkugellager vorgesehen. Weiters ist zwischen dem Gehäuse und dem zylindrischen Abschnitt mit dem größeren Durchmesser ein Radialkugellager angeordnet. Diese Konstruktion ist sehr aufwendig in der Herstellung, insbesondere da zur Herstellung der Gewindespindel keine vorgefertigte Gewindestange eingesetzt werden kann, sondern die Gewindespindel aus einer zylindrischen Welle gefertigt werden muss, wobei das Gewinde der Gewindespindeln hergestellt werden muss.

Bei einer weiteren Ausführungsform der Verbindung der Gewindespindel mit dem Trägerzahnrad weist das Trägerzahnrad ein Innengewinde auf, mit dem es auf das Gewinde der Gewindespindel aufgeschraubt ist. Hier müssen spezielle klemmbare Kontermuttern zur Festlegung des Trägerzahnrads auf der Gewindespindel vorgesehen sein und weiters muss das Trägerzahnrad mit Toleranzausgleichsbuchsen zur Verringerung des Spiels zwischen der Gewindespindel und dem Trägerzahnrad versehen sein. Zwar können durch diese Maßnahmen vorgefertigte Gewindestangen für die Gewindespindeln eingesetzt werden, allerdings ist die Konstruktion insgesamt dennoch sehr aufwendig und das gesamte Drehmoment muss über die verklemmten Gegenmuttern übertragen werden.

Aufgabe der Erfindung ist es eine Stelleinrichtung der eingangs genannten Art mit einer einfach herstellbaren Verbindung zwischen der Gewindespindel und dem Trägerzahnrad bereitzustellen, wobei die auftretenden Drehmomente und Kräfte zuverlässig übertragen werden und eine möglichst gute parallele und konzentrische Ausrichtung der Längsachse der Gewindespindel zur Drehachse des Trägerzahnrades gewährleistet ist. Erfindungsgemäß gelingt dies durch eine Stelleinrichtung mit den Merkmalen des Anspruchs 1.

Die Passfeder, die sich zumindest über den Großteil ihrer Länge im Bereich des zylindrischen Abschnitts des Befestigungsteils der Gewindespindel erstreckt, dient zur Übertragung von Drehmoment zwischen dem Trägerzahnrad und der Gewindespindel. Drehmoment kann aber zusätzlich auch über die zusammenwirkenden konischen Anschnitte der Gewindespindel und des Trägerzahnrads übertragen werden, so dass trotz der verschiedenen Abschnitte des Befestigungsteils der Gewindespindel eine von der Bauhöhe her kompakte Ausbildung ermöglicht wird. Die zusammenwirkenden konischen Abschnitte stellen zudem die parallele Ausrichtung der Längsachse der Gewindespindel und der Drehachse des Trägerzahnrads sicher, ohne dass bei der Montage hierfür besondere Vorkehrungen getroffen werden. Dies führt zu einem sehr einfachen Montagevorgang.

Vorteilhafterweise kann die Gewindespindel der erfindungsgemäßen Stelleinrichtung ausgehend von einer gerollten Standard-Gewindestange hergestellt werden, welche als Lagerware erhältlich ist. Die Erfindung kann nicht nur für Gewindespindeln mit Trapezgewinden sondern auch für Gewindespindeln mit Kugelgewinden eingesetzt werden.

Kegelsitzverbindungen, bei welchen die Verbindung über das Zusammenwirken von konisch ausgebildeten Verbindungsteilen erfolgt, sind an sich bekannt. Insbesondere werden solche Kegelsitzverbindungen eingesetzt, um Spannfutter von Bohrmaschinen mit der Bohrwelle zu verbinden. Auch Verbindungen von Naben mit Wellen über Spannkonen sind bekannt. Diese herkömmlich bekannten Kegelsitzverbindungen betreffen nicht gattungsgemäße Einrichtungen.

In einer vorteilhaften Ausführungsform der Erfindung weist der Befestigungsteil der Gewindespindel zusätzlich zum ersten zylindrischen Abschnitt, in welchem eine Verbindung der Gewindespindel mit dem Trägerzahnrad über die Passfeder erfolgt, einen zweiten zylindrischen Abschnitt auf. Dieser liegt weiter in Richtung zur Längsmitte der Gewindespindel als der konische Abschnitt und schließt vorzugsweise unmittelbar an den konischen Abschnitt an. Dieser zweite zylindrische Abschnitt wird zumindest über einen Teil seiner Längserstreckung von einem zweiten zylindrischen Abschnitt der Durchgangsöffnung des Trägerzahnrads aufgenommen, wobei zwischen den zweiten zylindrischen Abschnitten des Befestigungsteils und der Durchgangsöffnung des Trägerzahnrads vorzugsweise ein Schiebesitz ausgebildet ist, d.h. es liegt eine Passung mit einem nur sehr geringen Spiel vor. Dies führt zu einer zusätzlichen radialen Abstützung der Gewindespindel im Trägerzahnrad. Die Stabilität gegenüber Querkräften wird dadurch weiter verbessert. Auch wird eine optimale Ausrichtung der Längsachse der Gewindespindel parallel und konzentrisch zur Drehachse des Trägerzahnrads zusätzlich sichergestellt.

Die verschiedenen Abschnitte des Befestigungsteils der Gewindespindel können wie bereits erwähnt vorzugsweise durch ein definiertes Abdrehen der Gewindestange, aus der die Gewindespindel ausgebildet wird, im Bereich eines Längsendes hergestellt werden. Im konischen Abschnitt kann hierbei je nach Außendurchmesser und Kerndurchmesser (= Innendurchmesser des Gewindes) der verwendeten Gewindestange das Gewinde der Gewindestange vollständig abdreht sein oder ein mehr oder weniger großer Teil des Gewindes über einen mehr oder weniger großen Längsteil des konischen Abschnitts bestehen bleiben. In dem Bereich, in dem ein Teil des Außengewindes bestehen bleibt, bildet die abgedrehte Außenfläche des Gewindes die konischen Außenfläche des konischen Abschnitts.

Auch in dem vorzugsweise vorhandenen zweiten zylindrischen Abschnitt kann das Gewinde der Gewindestange ganz abgedreht sein oder nur teilweise. Im letzteren Falle bildet die zylindrisch abgedrehte Außenfläche des verbliebenen Teils des Gewindes die zylindrische Außenfläche des zylindrischen Abschnitts.

Im zwischen dem konischen Abschnitt und dem Schraubengewinde angeordneten (ersten) zylindrischen Abschnitt ist dagegen das Gewinde der als Ausgangsmaterial eingesetzten Gewindestange vorzugsweise vollständig abgedreht. Es liegt hier somit eine durchgehende zylindrische Außenfläche vor.

Weitere Vorteile und Einzelheiten der Erfindung werden im Folgenden anhand der beiliegenden Zeichnung erläutert. In dieser zeigen:
- Fig. 1: eine Basiseinheit, umfassend das Getriebegehäuse und die darin drehbar gelagerten Zahnräder im Längsschnitt durch das Getriebegehäuse, gemäß einer vorteilhaften Ausführungsform der Erfindung;
- Fig. 2: a + b den Befestigungsteil und einen daran anschließenden Teil des Hauptabschnitts einer mit der Basiseinheit von Fig. 1 verbindbaren Gewindespindel in zwei um 90° gedrehten Seitenansichten (in einem gegenüber Fig. 1 geänderten Maßstab);
- Fig. 3: die Stelleinrichtung gemäß diesem Ausführungsbeispiel der Erfindung im montierten Zustand (wobei die Basiseinheit wiederum im Querschnitt und die Gewindespindel im Bereich des Getriebegehäuses in Seitenansicht und im Bereich einer auf ihr angeordneten Spindelmutter schematisch dargestellt ist), mit einer schematisch dargestellten zu verstellenden Last;
- Fig. 4: einen Schnitt entlang der Linie AA von Fig. 3;
- Fig. 5 und Fig. 6: Darstellungen der Basiseinheit von Fig. 1 mit darin eingesetzten Gewindespindeln, welche gegenüber der in den Fig. 2 bis 4 dargestellten Gewindespindel unterschiedliche Durchmesser aufweisen;
- Fig. 7: die Basiseinheit mit einer eingesetzten Gewindespindel, die ein Kugelgewinde aufweist.
Die Fig. weisen unterschiedliche Maßstäbe auf.

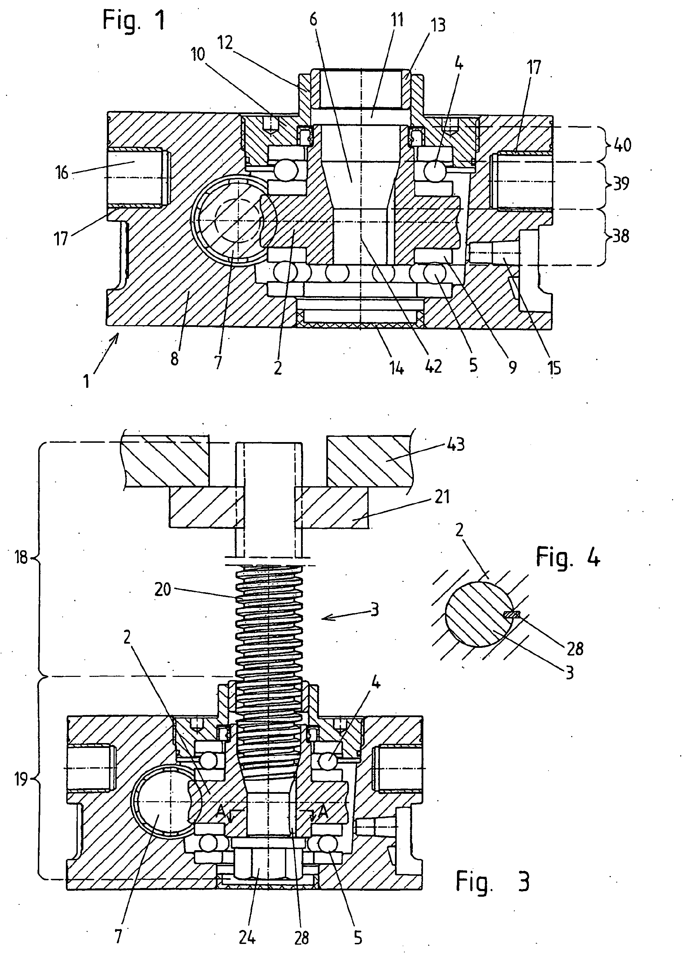

Fig. 1 zeigt die Basiseinheit der Stelleinrichtung gemäß einer vorteilhaften Ausführungsform der Erfindung. Diese Basiseinheit umfasst das Getriebegehäuse 1 und die darin drehbar gelagerten Zahnräder 2, 7. Das Trägerzahnrad 2 dient zur Halterung der weiter unten beschriebenen Gewindespindel 3. Im gezeigten Ausführungsbeispiel ist das Trägerzahnrad 2 in Form eines Schneckenrads ausgebildet und besitzt somit eine äußere Schneckenverzahnung. Eine Ausbildung in Form eines anderen Zahnrads, beispielsweise eines Kegelzahnrads ist denkbar und möglich.

Das Trägerzahnrad 2 ist über Axiallager 4, 5 drehbar im Getriebegehäuse 1 gelagert.

Die Nabe des Trägerzahnrads 2 weist weiters eine axiale Durchgangsöffnung 6 auf, welche zur Aufnahme der Gewindespindel 3 dient. Die Ausbildung dieser Durchgangsöffnung 6 wird nach der Beschreibung der Gewindespindel 3 beschrieben.

Mittels des drehbar im Getriebegehäuse 1 gelagerten Antriebszahnrads 7, welches mit dem Trägerzahnrad 2 im Zahneingriff steht, kann das Trägerzahnrad 2 gedreht werden. Das Antriebszahnrad 7 ist im gezeigten Ausführungsbeispiel in Form einer Schnecke ausgebildet. Je nach Ausbildung des Trägerzahnrads 2 sind auch andere Ausbildungen denkbar und möglich, beispielsweise eine Ausbildung in Form eines Kegelzahnrads.

Das Antriebszahnrad 7 weist eine in den Fig. nicht sichtbare aus dem Getriebegehäuse 1 herausstehende Antriebswelle auf, über welche es angetrieben werden kann, insbesondere mittels eines Antriebsmotors.

Das Getriebegehäuse 1 besitzt einen Gehäusebasisteil 8 mit einem inneren Aufnahmeraum 9 für die drehbar gelagerten Zahnräder 2, 7 und einen in den Gehäusebasisteil 8 eingeschraubten Gehäusedeckel 10, der eine Öffnung 11 als Durchführung für die Gewindespindel 3 besitzt. Der Gehäusedeckel 10 besitzt einen die Öffnung 11 umgehenden Ringflansch 12, in welchen eine Buchse 13 eingepresst ist. Diese kann beispielsweise aus Messing ausgebildet sein.

Auf der gegenüberliegenden Seite des Gehäusedeckels 10 schließt ein Deckel 14 eine Öffnung des Gehäusebasisteils 8. Weiters besitzt das Getriebegehäuse 1 eine Schmierbohrung 15 und in Ausnehmungen 16 eingepresste Schwenklagerbuchsen 17.

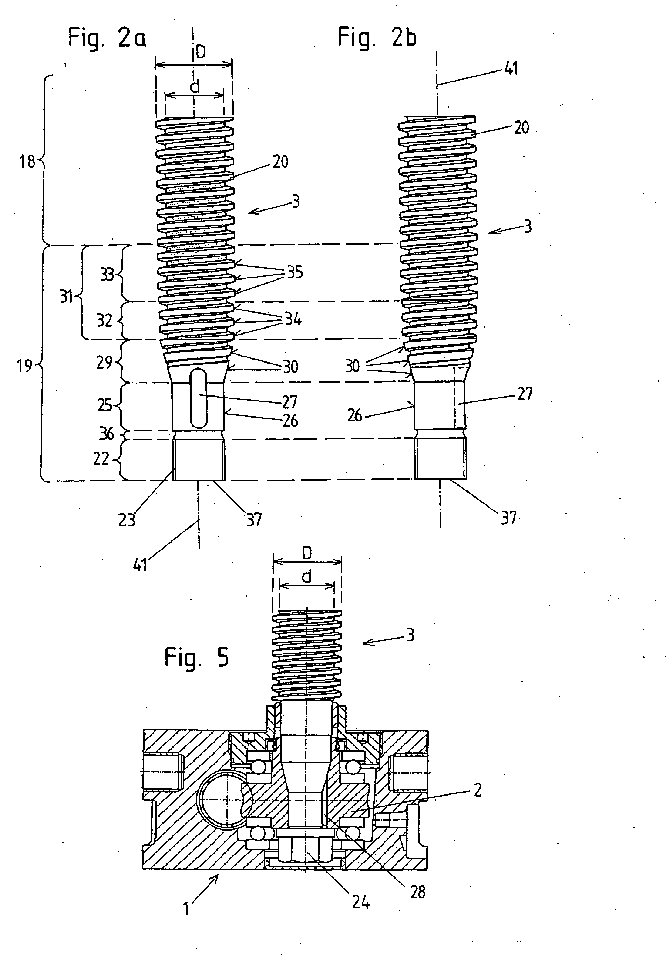

Die Gewindespindel 3 ist in den Ausführungsformen gemäß den Fig. 2 bis 6 als Trapezgewindespindel ausgebildet. Sie umfasst einen Hauptabschnitt 18, über welchen das Spindelgewinde 20 verläuft, und mit dem die Spindelmutter 21 (vgl. Fig. 3) in Eingriff steht. Die Spindelmutter 21 kann im Hauptabschnitt 18 der Gewindespindel 3 axial verstellt werden. Im Hauptabschnitt 18 erfolgt keine Bearbeitung des Gewindes der Gewindestange, aus welcher die Gewindespindel 3 vorzugsweise hergestellt wird.

Im Bereich eines Längsendes der Gewindespindel 3 ist ein Befestigungsteil 19 ausgebildet, der mehrere Abschnitte 22, 25, 36, 29, 31 umfasst.

Ein Endabschnitt 22, der im mit dem Trägerzahnrad 2 verbundenen Zustand der Gewindespindel 3 aus der Durchgangsöffnung 6 des Trägerzahnrads 2 herausragt, ist mit einem Schraubengewinde (= Feingewinde) 23 versehen, auf welches eine Spannmutter 24 (vgl. Fig. 3) aufschraubbar ist. Dieser Endabschnitt 22 schließt vorzugsweise direkt an das Längsende 37 der Gewindespindel 3 an.

Weiter in Richtung zur Längsmittel der Gewindespindel 3 (also weiter entfernt vom benachbarten Längsende 37) liegt ein erster zylindrischer Abschnitt 25 des Befestigungsteils 19, der vorzugsweise über einen Dehnungsabschnitt 36 an den mit dem Schraubengewinde 23 versehenen Endabschnitt 22 anschließt. Dieser erste zylindrische Abschnitt 25 besitzt eine zylindrische Außenfläche 26 und ist weiters mit einer Aufnahmenut 27 für eine Passfeder 28 (vgl. Fig. 3 und 4) versehen. Die in Richtung der Längsachse 41 der Gewindespindel 3 sich erstreckende Aufnahmenut 27 ist in der Seitenansicht gemäß Fig. 2b nicht sichtbar aber durch eine strichlierte Linie angedeutet.

Gegenüber dem ersten zylindrischen Abschnitt 25 weiter in Richtung zur Längsmitte der Gewindespindel 3 liegt ein konischer Abschnitt 29. Dieser erweitert sich (d.h. vergrößert sich in seinem Durchmesser) in Richtung zur Längsmitte der Gewindespindel 3 hin und besitzt eine konische Außenfläche 30. Vorzugsweise schließt der konische Abschnitt 29 unmittelbar an den ersten zylindrischen Abschnitt 25 an.

Im in den Fig. 2 bis 4 dargestellten Ausführungsbeispiel ist der Durchmesser der konischen Außenfläche 30 am dem ersten zylindrischen Abschnitt 25 zugewandten Ende des konischen Abschnitts 29 kleiner als der Kerndurchmesser d der Gewindespindel 3 (d.h. kleiner als der Innendurchmesser des Spindelgewindes 20), während der Durchmesser der konischen Außenfläche 30 am zur Längsmitte gerichteten Ende des konischen Abschnitts 29 größer als der Kerndurchmesser d der Gewindespindel 3 ist. Dies führt dazu, dass in einem dem ersten zylindrischen Abschnitt 25 benachbarten Teil des konischen Abschnitts 29 das Spindelgewinde 20 vollständig abgedreht ist und die konische Außenfläche 30 somit durchgehend ausgebildet ist. In einem daran in Richtung zur Längsmitte der Gewindespindel 3 anschließenden Teil des konischen Abschnitts 29 ist das Spindelgewinde 20 dagegen nur teilweise abgedreht. Die konische Außenfläche wird von der Außenfläche des verbliebenen Gewindeteils gebildet, so dass die konische Außenfläche 30 hier Unterbrechungen aufweist.

Der kleinste Außendurchmesser des konischen Abschnitts 29, der am dem benachbarten Längsende 37 zugewandten Ende des konischen Abschnitts 29 vorliegt, ist mindestens so groß wie der Außendurchmesser des ersten zylindrischen Abschnitts 25, im gezeigten Ausführungsbeispiel gleich groß.

Die Aufnahmenut 27 für die Passfeder 28 erstreckt sich beim gezeigten Ausführungsbeispiel in den konischen Abschnitt 29 hinein. Hierbei liegt der Boden der Aufnahmenut 9 im ersten zylindrischen Abschnitt 25 in der gleichen Ebene wie im konischen Abschnitt 29. Aufgrund der konischen Erweiterung steht die Passfeder 28, die sich im montierten Zustand der Stelleinrichtung ebenfalls in den konischen Abschnitt 29 erstreckt, im konischen Abschnitt 29 mit zunehmender Entfernung 30 radial vor. Im gezeigten Ausführungsbeispiel enden die Aufnahmenut 27 und die Passfeder etwa an der Stelle des konischen Abschnitts 29, an welcher die Passfeder nicht mehr über die konische Außenfläche 30 vorragt.

Der Befestigungsteil 19 umfasst weiters einen zweiten zylindrischen Abschnitt 31, der gegenüber dem konischen Abschnitt 29 weiter in Richtung zur Längsmitte der Gewindespindel 3 liegt. Vorzugsweise schließt der zweite zylindrische Abschnitt 31 unmittelbar an den konischen Abschnitt 29 an.

Der zweite zylindrische Abschnitt 31 besitzt im gezeigten Ausführungsbeispiel der Erfindung zwei Bereiche 32, 33 mit unterschiedlichen Außendurchmessern. Der erste Bereich 32, der auf der näher beim konischen Abschnitt 29 gelegenen Seite des zweiten zylindrischen Abschnitts 31 liegt, besitzt einen kleineren Außendurchmesser als der zweite Bereich 33.

Der Außendurchmesser des ersten Bereichs 32 ist mindestens so groß wie der Außendurchmesser des konischen Abschnitts 29 an seiner größten Stelle (also am der Längsmitte der Gewindespindel 3 zugewandten Ende des konischen Abschnitts 29), im gezeigten Ausführungsbeispiel gleich groß, aber kleiner als der Außendurchmesser D der Gewindespindel 3 in ihrem Hauptabschnitt 18 (d.h. kleiner als der Außendurchmesser des Spindelgewindes 20), der sich über den Großteil der Länge der Gewindespindel 3 erstreckt.

Im ersten Bereich 32 des zweiten zylindrischen Abschnitts 31 ist im Ausführungsbeispiel gemäß den Fig. 2 bis 4 das Spindelgewinde 20 teilweise abgedreht. Der verbleibende Teil des Spindelgewindes 20 bildet eine unterbrochene zylindrische Außenfläche 34.

Im zweiten Bereich 33 ist das Spindelgewinde 3 im Ausführungsbeispiel gemäß den Fig. 2 bis 4 ganz geringfügig abgedreht worden, um Fertigungstoleranzen des Spindelgewindes auszugleichen und eine definierte zylindrische Außenfläche 35 auszubilden (die, da sie von der Außenfläche des verbleibenden Gewindes gebildet wird, Unterbrechungen aufweist). Diese Abdrehung ist so gering, dass sie in den Fig. 2 und 3 nicht sichtbar ist.

Die Durchgangsöffnung 6 des Trägerzahnrads 2 besitzt einen ersten zylindrischen Abschnitt 38, der zur Aufnahme des ersten zylindrischen Abschnitts 25 der Gewindespindel 3 dient, wobei nur ein geringes Spiel vorliegt, vorzugsweise ist ein Schiebesitz zwischen dem zylindrischen Abschnitt 38 der Durchgangsöffnung 6 und dem zylindrischen Abschnitt 25 der Gewindespindel 3 ausgebildet und das Spiel dieses Schiebesitzes beträgt vorzugsweise weniger als 3/100 mm.

Im ersten zylindrischen Abschnitt 38 ist weiters eine axiale Aufnahmenut zur Aufnahme der Passfeder 28 ausgebildet.

Weiters besitzt die Durchgangsöffnung 6 einen konischen Abschnitt 39, der zur Aufnahme des konischen Abschnitts 29 des Befestigungsteils 19 der Gewindespindel 3 dient, wobei der konische Abschnitt 29 des Befestigungsteils 19 im montierten Zustand der Stelleinrichtung an der Wand der Durchgangsöffnung 6 in ihrem konischen Abschnitt 39 anliegt. Die Aufnahmenut für die Passfeder 28 erstreckt sich vorzugsweise in diesen konischen Abschnitt 39 hinein, wobei der Boden der Aufnahmenut im zylindrischen Abschnitt 38 und im konischen Abschnitt 39 in der gleichen Ebene liegt und die Aufnahmenut bis zu der Stelle des konischen Abschnitts 39 verläuft, an welcher der Boden der Aufnahmenut die Mantelfläche des konischen Abschnitts 39 erreicht.

Die Durchgangsöffnung 6 besitzt im gezeigten Ausführungsbeispiel weiters einen zweiten zylindrischen Abschnitt 40, der zur Aufnahme des zweiten zylindrischen Abschnitts 31 über dessen ersten Bereich 32 dient. Es liegt hierbei ein enger Schiebesitz mit einem nur sehr geringen Spiel vor (welches vorzugsweise weniger als 2/100 mm beträgt).

Die Gewindespindel 3 tritt im zweiten zylindrischen Abschnitt 31 durch die Buchse 13, und zwar im zweiten Bereich 33 des zweiten zylindrischen Abschnitts 31. Es liegt hierbei ein geringes Spiel zwischen der Innenfläche der Buchse 13 und der zylindrischen Außenfläche 35 vor, welches vorzugsweise kleiner als 8/100 mm ist, beispielsweise im Bereich zwischen 3/100 und 5/100 mm liegt.

Ohne einwirkende Querkräfte soll die Gewindespindel 3 möglichst berührungslos zur Buchse 13 sein. Bei einwirkenden Querkräften kommt es zu einer Abstützung der Gewindespindel 3 an der Buchse 13.

Zur Montage der Gewindespindel 3 wird diese mit eingesetzter Passfeder 28 in das Trägerzahnrad 2 eingeschoben, bis der Endabschnitt 22 aus der Durchgangsöffnung 6 herausragt. Bei abgenommenem Deckel 14 wird die Spannmutter 24 auf das Schraubengewinde 23 des Endabschnitts 22 aufgeschraubt und festgezogen, wobei es durch Anlage der konischen Außenfläche 30 am Antriebszahnrad 7 im Bereich des konischen Abschnitts 39 der Durchgangsöffnung 6 zur axialen Befestigung der Gewindespindel 3 sowie zur Ausrichtung ihrer Längsachse 41 gegenüber der Drehachse 42 des Trägerzahnrads 2 kommt, so dass diese beiden Achsen 41, 42 parallel und konzentrisch sind, d.h. zusammenfallen.

In Fig. 3 ist weiters schematisch eine Last 43 angedeutet, die mit der Spindelmutter 21 verbunden ist und von der Spindelmutter 21 bei ihrer axialen Verstellung entlang der Gewindespindel 3 verstellt wird. Durch die Verbindung der Spindelmutter 21 mit der Last 43 wird eine Verdrehsicherung der Spindelmutter 21 bewirkt.

In Fig. 5 ist die Verbindung einer Gewindespindel 3 mit der in Fig. 1 dargestellten Basiseinheit gezeigt, wobei diese Gewindespindel 3 einen größeren Kerndurchmesser d und somit auch einen größeren Außendurchmesser D als die Gewindespindel 3 von Fig. 3 aufweist. Das Spindelgewinde 20 ist hier im Befestigungsteil 19 der Gewindespindel 3 vollständig abgedreht, um die Abschnitte 22, 25, 29, 31 des Befestigungsteils 19 auszubilden.

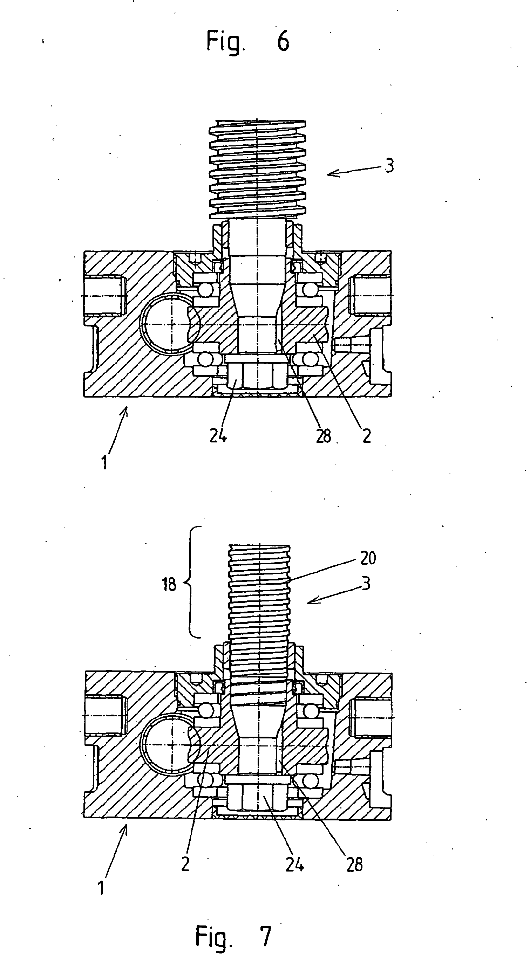

Fig. 6 zeigt eine mit der Basiseinheit von Fig. 1 verbundene Gewindespindel 3 mit einem demgegenüber noch größeren Kerndurchmesser d und Außendurchmesser D.

Fig. 7 zeigt eine in der Basiseinheit von Fig. 1 montierte Gewindespindel 3 mit einem in Form eines Kugelgewindes ausgebildeten Spindelgewindes 20. Der Kerndurchmesser d dieser Gewindespindel 3 ist hier geringfügig kleiner als der Durchmesser der zylindrischen Außenfläche 34 im ersten Bereich 32 des zweiten zylindrischen Abschnitts 31.

Es können somit wie dargestellt Gewindespindeln 3 mit unterschiedlichen Kerndurchmessern d bzw. Außendurchmessern D im Zusammenhang mit dem gleichen Getriebegehäuse 1 mit darin drehbar gelagerten Zahnrädern 2, 7 eingesetzt werden, indem sie im Befestigungsteil 19 jeweils entsprechend bearbeitet werden. Als Ausgangsprodukt für die Gewindespindeln 3 können hierbei kommerziell erhältliche Standard-Spindeln eingesetzt werden.

Der erste und der zweite Bereich 32, 33 des zweiten zylindrischen Abschnitts 31 können auch gleiche Außendurchmesser aufweisen.

Grundsätzlich wäre es auch denkbar und möglich, dass der Befestigungsteil 19 zur Längsmitte der Gewindespindel 3 hin nach dem konischen Abschnitt 29 endet, der zweite zylindrische Abschnitt somit entfällt. Der zweite zylindrische Abschnitt 40 des Trägerzahnrads 2 könnte dann ebenfalls entfallen und die Herausführung der Gewindespindel 3 aus dem Getriebegehäuse 1 durch die Buchse 13 könnte im unbearbeiteten Hauptabschnitt 18 erfolgen.

Bevorzugt ist es aber, dass zumindest ein zweiter zylindrischer Abschnitt 31 mit einem ersten Bereich 32 vorgesehen ist, der mit dem zweiten zylindrischen Abschnitt 40 der Durchgangsöffnung 6 zusammenwirkt, um eine weitere Abstützung der Gewindespindel 3 gegenüber Querkräften bzw. eine weitere Zentrierung der Gewindespindel 3 zu erreichen. Weiters ist es bevorzugt, dass die Gewindespindel 3 auch in einem zweiten Bereich 33 des zweiten zylindrischen Abschnitts 31 gegenüber dem Hauptabschnitt 18 bearbeitet ist, um ein geringeres Spiel zwischen der Buchse 13 und der Gewindespindel 3 zu ermöglichen.

### Legende

### zu den Hinweisziffern

- 1: Getriebegehäuse
- 2: Trägerzahnrad
- 3: Gewindespindel
- 4: Achsiallager
- 5: Achsiallager
- 6: Durchgangsöffnung
- 7: Antriebszahnrad
- 8: Gehäusebasisteil
- 9: Aufnahmeraum
- 10: Gehäusedeckel
- 11: Öffnung
- 12: Ringflansch
- 13: Buchse
- 14: Deckel
- 15: Schmierbohrung
- 16: Ausnehmung
- 17: Schwenklagerbuchse
- 18: Hauptabschnitt
- 19: Befestigungsteil
- 20: Spindelgewinde
- 21: Spindelmutter
- 22: Endabschnitt
- 23: Schraubengewinde
- 24: Spannmutter
- 25: erster zylindrischer Abschnitt
- 26: zylindrische Außenfläche
- 27: Aufnahmenut
- 28: Passfeder
- 29: konischer Abschnitt
- 30: konische Außenfläche
- 31: zweiter zylindrischer Abschnitt
- 32: erster Bereich
- 33: zweiter Bereich
- 34.: zylindrische Außenfläche
- 35: zylindrische Außenfläche
- 36: Dehnabschnitt
- 37: Längsende
- 38: erster zylindrischer Abschnitt
- 39: konischer Abschnitt
- 40: zweiter zylindrischer Abschnitt
- 41: Längsachse
- 42: Drehachse
- 43: Last

## Patentansprüche

1. Stelleinrichtung zum Positionieren einer Last, mit einer Gewindespindel (3), die im Bereich eines Längsendes (37) mit einem Trägerzahnrad (2), insbesondere in Form eines Schneckenrades, welches in einem Getriebegehäuse (1) drehbar gelagert ist und mittels eines mit ihm in Zahneingriff stehenden Antriebszahnrades (7), insbesondere in Form einer Schnecke, in Drehung versetzbar ist, drehfest und achsial unverschiebbar verbunden ist, und mit einer auf dem Spindelgewinde (20) angeordneten Spindelmutter (21), die H durch eine Drehung der Gewindespindel (3) zum Positionieren der Last (43) achsial verstellbar ist, wobei ein im Bereich des Längsendes (37) der Gewindespindel (3) ausgebildeter Befestigungsteil (19) der Gewindespindel (3), über welchen das Spindelgewinde (20) zumindest teilweise abgedreht ist, eine zentrale Durchtrittsöffnung (6) durch das Trägerzahnrad (2) durchsetzt und mit dem Trägerzahnrad (2) über eine Passfeder (28) verbunden ist und weiters in einem aus der Durchtrittsöffnung (6) des Trägerzahnrads (2) herausragenden Endabschnitt (22) mit einem Schraubengewinde (23) versehen ist, auf das eine die Gewindespindel (3) gegen das Trägerzahnrad (2) verspannende Spannmutter (24) aufgeschraubt ist, **dadurch gekennzeichnet, dass** der Befestigungsteil (19) zusätzlich zu einem zylindrischen Abschnitt (25), der von einem zylindrischen Abschnitt (38) der Durchgangsöffnung (6) des Trägerzahnrads (2) aufgenommen wird und in welchem eine Übertragung von Drehmoment zwischen dem Trägerzahnrad (2) und dem Befestigungsteil (19) über die Passfeder (28) erfolgt, einen weiter in Richtung zur Längsmitte der Gewindespindel (2) gelegenen und in Richtung zur Längsmitte der Gewindespindel (3) sich erweitenden konischen Abschnitt (29) aufweist, der von einem konischen Abschnitt (39) der Durchgangsöffnung (6) des Trägerzahnrads (2) aufgenommen wird, wobei der konische Abschnitt (29) des Befestigungsteils (19) und der konische Abschnitt (39) des Trägerzahnrads (2) von der Spannmutter (24) gegeneinander verspannt sind.

2. Stelleinrichtung nach Anspruch 1, **dadurch gekennzeichnet, dass** der zylindrische Abschnitt (25) des Befestigungsteils (19) über einen den Abschnitt (36) an den mit dem Schraubengewinde (23) versehenen Endabschnitt (22) des Befestigungsteils (19) anschließt.

3. Stelleinrichtung nach Anspruch 1 oder Anspruch 2, **dadurch gekennzeichnet, dass** der zylindrische Abschnitt (25) des Befestigungsteils (19) vom zylindrischen Abschnitt (38) der Durchgangsöffnung (6) des Trägerzahnrads (2) über einen Schiebesitz aufgenommen ist.

4. Stelleinrichtung nach einem der Ansprüche 1 bis 3, **dadurch gekennzeichnet, dass** der konische Abschnitt (29) unmittelbar an den zylindrischen Abschnitt (25) anschließt.

5. Stelleinrichtung nach einem der Ansprüche 1 bis 4, **dadurch gekennzeichnet, dass** eine im zylindrischen Abschnitt (25) verlaufende Aufnahmenut (27) für die Passfeder (28) auch zumindest über einen an den zylindrischen Abschnitt (25) anschließenden Teil des konischen Abschnitts (29) verläuft, wobei der Boden der Aufnahmenut (27) im zylindrischen Abschnitt (25) und im konischen Abschnitt (29) in der gleichen Ebene liegt, und dass sich die in der Aufnahmenut (27) angeordnete Passfeder (28), die weiters von einer Aufnahmenut im Trägerzahnrad (2) aufgenommen ist, auch über einen Teil des an den zylindrischen Abschnitt (25) des Befestigungsteils (19) anschließenden konischen Abschnitts (29) bzw. an den zylindrischen Abschnitt (38) der Durchgangsöffnung (6) anschließenden konischen Abschnitts (39) der Durchgangsöffnung (6) erstreckt.

6. Stelleinrichtung nach einem der Ansprüche 1 bis 5, **dadurch gekennzeichnet, dass** der Befestigungsteil zusätzlich zum ersten zylindrischen Abschnitt (25), der zwischen dem Endabschnitt (22), der das Schraubengewinde (23) aufweist, und dem konischen Abschnitt (29) liegt, einen zweiten zylindrischen Abschnitt (31) aufweist, der weiter in Richtung zur Längsmitte der Gewindespindel (3) als der konische Abschnitt (29) liegt und zumindest über einen Teil seiner Längserstreckung von einem zweiten zylindrischen Abschnitt (40) der Durchgangsöffnung (6) des Trägerzahnrads (2), vorzugsweise in einem Schiebesitz, aufgenommen wird.

7. Stelleinrichtung nach Anspruch 6, **dadurch gekennzeichnet, dass** der zweite zylindrische Abschnitt (31) unmittelbar an den konischen Abschnitt (29) anschließt.

8. Stelleinrichtung nach Anspruch 6 oder Anspruch 7, **dadurch gekennzeichnet, dass** der zweite zylindrische Abschnitt (31) weiters eine Buchse (13), die in eine Öffnung (11) im Getriebegehäuse (1) eingesetzt ist, mit Spiel durchsetzt, wobei dieses Spiel vorzugsweise weniger als 8/100 mm ist.

9. Stelleinrichtung nach einem der Ansprüche 6 bis 8, **dadurch gekennzeichnet, dass** der zweite zylindrische Abschnitt (31) einen ersten Bereich (32) mit einem kleineren Außendurchmesser, welcher vom zweiten zylindrischen Abschnitt (40) der Durchgangsöffnung (6) des Trägerzahnrads (2) aufgenommen ist, und einen zweiten Bereich (33) mit einem demgegenüber größeren Außendurchmesser aufweist, der die Buchse (13) durchsetzt.

10. Stelleinrichtung nach einem der Ansprüche 6 bis 9, **dadurch gekennzeichnet, dass** der Außendurchmesser des zweiten zylindrischen Abschnitts (31) mindestens so groß wie der größte Außendurchmesser des konischen Abschnitts (29) ist.

11. Stelleinrichtung nach einem der Ansprüche 1 bis 10, **dadurch gekennzeichnet, dass** der kleinste Außendurchmesser des konischen Abschnitts (29) mindestens so groß wie der Außendurchmesser des ersten zylindrischen Abschnitts (25) des Befestigungsteils (19) ist.

## Claims

1. An adjusting device for positioning a load, comprising a threaded spindle (3) which is connected in the region of a longitudinal end (37) to a carrier toothed wheel (2), particularly in the form of a worm wheel, so as to be rotationally fixed and non-displaceable axially, which carrier toothed wheel is rotatably mounted in a gear housing (1) and may be set rotating by means of a driving toothed wheel (7), particularly in the form of a worm, meshing with the said carrier toothed wheel, and comprising a spindle nut (21) arranged on the spindle thread (20) which is movable axially by means of a rotation of the threaded spindle (3) in order to position the load (43), wherein a fastening part (19) of the threaded spindle (3) formed in the region of the longitudinal end (37) of the threaded spindle (3), over which the spindle thread (20) is at least partially turned, penetrates a central passage opening (6) through the carrier toothed wheel (2) and is connected to the carrier toothed wheel (2) via a feather key (28) and, furthermore, is provided with a screw thread (23) in an end portion (22) projecting out of the passage opening (6) of the carrier toothed wheel (2), onto which screw thread is screwed a clamping nut (24) which clamps the threaded spindle (3) relative to the carrier toothed wheel (2), **characterised in that** the fastening part (19) has, in addition to a cylindrical portion (25) which is received by a cylindrical portion (38) of the passage opening (6) of the carrier toothed wheel (2) and in which transmission of torque takes place between the carrier toothed wheel (2) and the fastening part (19) via the feather key (28), a conical portion (29) situated further towards the longitudinal centre of the threaded spindle (2) [*sic*, *recte* (3)] and widening towards the longitudinal centre of the threaded spindle (3), which conical portion is received by a conical portion (39) of the passage opening (6) of the carrier toothed wheel (2), the conical portion (29) of the fastening part (19) and the conical portion (39) of the carrier toothed wheel (2) being clamped relative to one another by the clamping nut (24).

2. An adjusting device according to Claim 1, **characterised in that** the cylindrical portion (25) of the fastening part (19) adjoins the end portion (22) of the fastening part (19) provided with the screw thread (23) by way of a portion (36).

3. An adjusting device according to Claim 1 or Claim 2, **characterised in that** the cylindrical portion (25) of the fastening part (19) is received by the cylindrical portion (38) of the passage opening (6) of the carrier toothed wheel (2) by way of a sliding fit.

4. An adjusting device according to one of Claims 1 to 3, **characterised in that** the conical portion (29) directly adjoins the cylindrical portion (25).

5. An adjusting device according to one of Claims 1 to 4, **characterised in that** a receiving groove (27) for the feather key (28), which receiving groove extends in the cylindrical portion (25), also extends at least over a part of the conical portion (29) adjoining the cylindrical portion (25), the base of the receiving groove (27) in the cylindrical portion (25) and in the conical portion (29) lying in the same plane, and **in that** the feather key (28) arranged in the receiving groove (27), which feather key, furthermore, is received by a receiving groove in the carrier toothed wheel (2), also extends over a part of the conical portion (29) adjoining the cylindrical portion (25) of the fastening part (19) and the conical portion (39) of the passage opening (6) adjoining the cylindrical portion (38) of the passage opening (6) respectively.

6. An adjusting device according to one of Claims 1 to 5, **characterised in that** the fastening part has, in addition to the first cylindrical portion (25) located between the end portion (22), which has the screw thread (23), and the conical portion (29), a second cylindrical portion (31) which is located further towards the longitudinal centre of the threaded spindle (3) than the conical portion (29) and is received at least over part of its longitudinal extent by a second cylindrical portion (40) of the passage opening (6) of the carrier toothed wheel (2), preferably in a sliding fit.

7. An adjusting device according to Claim 6, **characterised in that** the second cylindrical portion (31) directly adjoins the conical portion (29).

8. An adjusting device according to Claim 6 or Claim 7, **characterised in that** the second cylindrical portion (31), furthermore, penetrates a bushing (13) with clearance, which bushing is inserted into an opening (11) in the gear housing (1), this clearance preferably being less than 8/100 mm.

9. An adjusting device according to one of Claims 6 to 8, **characterised in that** the second cylindrical portion (31) has a first region (32) with a smaller outer diameter which is received by the second cylindrical portion (40) of the passage opening (6) of the carrier toothed wheel (2) and a second region (33) with a larger outer diameter in relation thereto, which second region penetrates the bushing (13).

10. An adjusting device according to one of Claims 6 to 9, **characterised in that** the outer diameter of the second cylindrical portion (31) is at least as large as the largest outer diameter of the conical portion (29).

11. An adjusting device according to one of Claims 1 to 10, **characterised in that** the smallest outer diameter of the conical portion (29) is at least as large as the outer diameter of the first cylindrical portion (25) of the fastening part (19).

## Revendications

1. Actionneur pour positionner une charge comprenant une broche filetée (3) reliée solidairement en rotation et bloquée axialement dans la zone de son extrémité longitudinale (37) avec une roue dentée porteuse (2) notamment sous la forme d'une roue à vis logée à rotation dans un boîtier de transmission (1) et qui peut être mise en rotation par l'intermédiaire d'une roue dentée d'entraînement (7) engrenant avec celle-ci, notamment sous la forme d'une vis,
un écrou fileté (21) installé sur le filetage de la broche (20) pour être déplacé axialement par la rotation de la broche filetée (3) pour positionner la charge (43), et
une partie de fixation (19) de la broche filetée (3) réalisée dans la zone de l'extrémité longitudinale (37) de la broche filetée (3), et dont le filetage (20) a été au moins en partie dégagé, traverse un orifice de passage (6) central dans la roue dentée porteuse (2) en étant relié à la roue dentée porteuse (2) par une clavette (28), et comportant en outre un segment d'extrémité (22) sortant de l'orifice traversant (6) de la roue dentée porteuse (2) comportant un filetage (23) sur lequel est vissé un écrou de serrage (24) qui assure le serrage de la broche filetée (3) contre la roue dentée porteuse (2),
**caractérisé en ce qu'**
en plus d'un segment cylindrique (25) logé dans le segment cylindrique (38) de l'orifice traversant (6), de la roue dentée porteuse (2), et dans lequel se fait la transmission du couple entre la roue dentée porteuse (2) et la pièce de fixation (19) par l'intermédiaire de la clavette (28), la partie de fixation (19) comporte un segment conique (29) situé plus loin en direction du milieu longitudinal de la broche filetée (3) et s'élargissant de façon conique en direction du milieu longitudinal de la broche filetée (3), ce segment conique étant logé dans le segment conique (39) de l'orifice traversant (6) de la roue dentée porteuse (2),
le segment conique (29) de la partie de fixation (19) et le segment conique (39) de la roue dentée porteuse (2) sont serrés l'un contre l'autre par l'écrou de serrage (24).

2. Actionneur selon la revendication 1,
**caractérisé en ce que**
le segment cylindrique (25) de la partie de fixation (19) est relié par l'intermédiaire du segment (36) au segment d'extrémité (22) de la partie de fixation (19) muni du filetage (23).

3. Actionneur selon la revendication 1 ou 2,
**caractérisé en ce que**
le segment cylindrique (25) de la partie de fixation (19) est logé dans le segment cylindrique (38) de l'orifice traversant (6) de la roue dentée porteuse (2) par l'intermédiaire d'un siège coulissant.

4. Actionneur selon les revendications 1 à 3,
**caractérisé en ce que**
le segment conique (39) est relié directement au segment cylindrique (25).

5. Actionneur selon les revendications 1 à 4,
**caractérisé par**
une rainure de réception (27) dans le segment cylindrique (25) pour recevoir la clavette (28) s'étendant également au moins sur la partie du segment conique (29) adjacente au segment cylindrique (25), le fond de la rainure de réception (27) étant situé au même niveau dans le segment cylindrique (25) et dans le segment conique (29), et
la clavette (28) placée dans la rainure de réception (27) est en outre reçue par la rainure de réception de la roue dentée porteuse (2), et s'étend également sur une partie du segment conique (29) adjacent au segment cylindrique (25) de la partie de fixation (19) ou sur segment conique (39) de l'orifice traversant (6) adjacent au segment cylindrique (38) de l'orifice adjacent (6).

6. Actionneur selon les revendications 1 à 6,
**caractérisé en ce que**
la partie de fixation comporte en plus du premier segment cylindrique (25), un second segment cylindrique (31) entre le segment d'extrémité (22) muni du filetage (23) et du segment conique (29), ce second segment cylindrique étant situé plus loin que le segment conique (29) en direction du milieu longitudinal de la broche filetée (3), et sur au moins une partie de sa longueur, il est reçu par un second segment cylindrique (40) de l'orifice traversant (6) de la roue dentée porteuse (2) de préférence selon un siège coulissant.

7. Actionneur selon la revendication 6,
**caractérisé en ce que**
le second segment cylindrique (31) rejoint directement le segment conique (29).

8. Actionneur selon la revendication 6 ou 7,
**caractérisé en ce que**
le second segment cylindrique (31) traverse en outre avec du jeu un manchon (13) logé dans l'ouverture (11) du boîtier de transmission (1), et ce jeu est de préférence inférieur à 8/ 100 mm.

9. Actionneur selon les revendications 6 à 8,
**caractérisé en ce que**
le second segment cylindrique (31) comporte une première zone (32) de petit diamètre extérieur reçu par le second segment cylindrique (40) de l'orifice traversant (6) de la roue dentée porteuse (2), et une seconde zone (33) de plus grand diamètre extérieur par rapport au précédent, et qui traverse le manchon (13).

10. Actionneur selon les revendications 6 à 9,
**caractérisé en ce que**
le diamètre extérieur du second segment cylindrique (31) est au moins aussi grand que le plus grand diamètre extérieur du segment conique (29).

11. Actionneur selon les revendications 1 à 10,
**caractérisé en ce que**
le plus petit diamètre extérieur du segment conique (29) est au moins aussi grand que le diamètre extérieur du premier segment cylindrique (25) de la partie de fixation (19).
